Europäisches Patentamt

European Patent Office

Office européen des brevets

(19)

(11) **EP 1 092 167 B1**

(12) **FASCICULE DE BREVET EUROPEEN**

(45) Date de publication et mention
de la délivrance du brevet:
**27.02.2002 Bulletin 2002/09**

(21) Numéro de dépôt: **99926572.1**

(22) Date de dépôt: **30.06.1999**

(51) Int Cl.⁷: $G02B\ 6/34$

(86) Numéro de dépôt international:
**PCT/FR99/01571**

(87) Numéro de publication internationale:
**WO 00/02078 (13.01.2000 Gazette 2000/02)**

(54) **FILTRE OPTIQUE A RESEAU AYANT UNE REPONSE SPECTRALE APODISEE**

OPTISCHES FILTER MIT APODISIERTEM SPEKTRALEM VERHALTEN

OPTICAL FILTER WITH APODIZED SPECTRAL RESPONSE

(84) Etats contractants désignés:
**DE GB IT**

(30) Priorité: **01.07.1998 FR 9808391**

(43) Date de publication de la demande:
**18.04.2001 Bulletin 2001/16**

(73) Titulaire: **FRANCE TELECOM**
**75015 Paris (FR)**

(72) Inventeurs:
• **LUPU, Anatole**
**F-94230 Cachan (FR)**

• **CARENCO, Alain**
**F-92340 Bourg-la-Reine (FR)**

(74) Mandataire: **Texier, Christian**
**Cabinet Régimbeau 20, rue de Chazelles**
**75847 Paris cedex 17 (FR)**

(56) Documents cités:
**WO-A-97/22023**          **DE-A- 19 500 136**
**US-A- 5 668 900**

**Description**

La présente invention concerne le domaine des dispositifs optiques en ondes guidées comportant un réseau, c'est à dire comportant une partie destinée à être parcourue par une onde optique et dans laquelle un paramètre optique varie de manière alternative le long du trajet de la lumière.

L'invention concerne par exemple les coupleurs co-directifs et les coupleurs contra-directifs, les réflecteurs de Bragg en onde guidée, les convertisseurs de modes à fibres, ou encore par exemple les miroirs de Bragg pour cavité VCSEL.

Ces dispositifs réalisent une fonction de filtrage des ondes optiques. Ils permettent d'éliminer des ondes dont les longueurs d'onde se trouvent en dehors d'une gamme choisie.

De manière générale, un filtre optique est de bonne qualité lorsqu'il effectue une sélection précise des longueurs d'ondes à transmettre et des longueurs d'ondes à rejeter. En d'autres termes, si sa réponse spectrale prend des valeurs sensiblement constantes et proches de 1 dans la gamme des longueurs d'onde à transmettre, et prend des valeurs sensiblement constantes et proches de zéro en dehors de cette gamme, le filtre est de bonne qualité.

Les filtres à réseaux actuels présentent cependant des réponses spectrales qui comportent des lobes secondaires.

On a proposé différentes méthodes pour réaliser des filtres optiques dans lesquels ces lobes secondaires soient d'amplitude réduite, autrement dit des filtres à fort taux de réjection. Ces méthodes sont connues par l'homme de l'art sous le terme de méthodes d'apodisation.

Dans le cas où le dispositif à réseau est le siège d'interférences décrites par un formalisme utilisant le principe des modes couplés, on a ainsi proposé des méthodes d'apodisation qui consistent à moduler une amplitude de variation du coefficient de couplage le long du parcours de la lumière.

Une première de ces méthodes de variation d'amplitude du coefficient de couplage, couramment utilisée pour la conception de coupleurs co et contra-directifs, est mise en oeuvre en faisant varier une distance interguides. Cette méthode est présentée dans les documents [1] à [3]. Elle permet d'obtenir un taux d'apodisation des lobes secondaires de l'ordre de 30 à 40 dB.

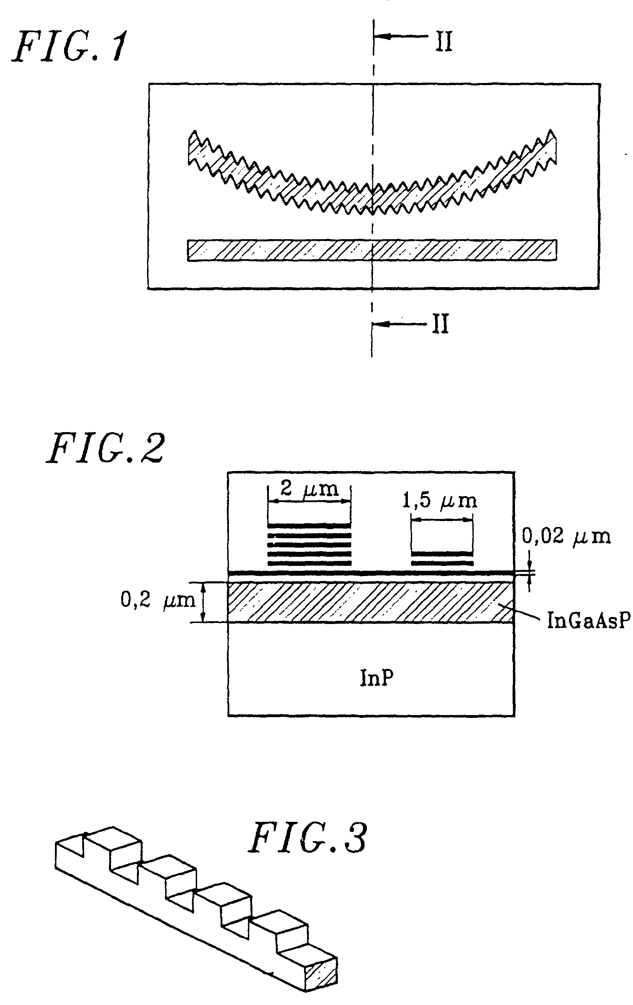

On a représenté sur la figure 1 annexée une vue de dessus d'un tel coupleur co-directif à variation de la distance interguides.

Ce dispositif présente d'abord une oscillation de la distance entre deux guides par ondulation transversale d'un des deux guides qui est propre à fournir une répartition du coefficient du couplage de forme oscillante le long du guide ondulant, conformément au principe des modes couplés. La période de cette oscillation détermine la longueur d'onde initiale ou la longueur d'accord de phase, sélectionnée par le dispositif.

Le guide ondulant présente en outre une forme générale arquée de sorte que la distance interguides est minimale au centre du dispositif et maximale à ses extrémités. Ainsi le coefficient de couplage moyen calculé sur chaque ondulation présente un maximum en partie centrale et diminue progressivement lorsqu'on se rapproche des extrémités des guides.

Une telle variation en cloche du coefficient de couplage moyen calculé sur chaque ondulation produit une diminution des lobes secondaires de la réponse spectrale du filtre.

Cette méthode présente toutefois un inconvénient majeur lié au fait que la distance moyenne interguides doit onduler avec une amplitude comprise entre 2 et 5 µm, l'amplitude de variation sinusoïdale étant de l'ordre de 1 µm. Sa mise en oeuvre nécessite donc une grande précision sur les variations de la distance inter-guides, précision qui est difficilement accessible en pratique.

De plus, le coefficient de couplage est lié à la distance interguides selon une fonction qui n'est pas linéaire, ce qui a tendance à accentuer les effets négatifs des écarts et incertitudes sur la distance interguides.

Cette méthode est en outre difficilement réalisable pour des coupleurs verticaux, et ne s'applique pas à des composants dans lesquels il n'y a qu'un seul guide, comme par exemple les réflecteurs de Bragg tels que celui représenté à la figure 3 annexée, ou également comme les convertisseurs de modes.

Une seconde méthode, appelée méthode de variation de l'amplitude de modulation, consiste à faire varier le coefficient de couplage en faisant varier un profil de corrugation ou en faisant varier l'indice de réfraction dans une fibre.

Dans le cas où l'on fait varier le profit de corrugation, il est difficile en pratique de contrôler des amplitudes de corrugation nécessaires pour que la modulation du coefficient de couplage soit suffisamment précise.Les amplitudes de corrugation nécessaires sont en effet généralement inférieures à 1 µm.

Dans le cas où l'on fait varier l'indice dans la fibre, on met en oeuvre des techniques d'insolation sous ultra-violets qui sont très complexes et très fastidieuses. Ces méthodes sont présentées dans les documents [4] à [7] et s'adressent de manière spécifique aux réseaux inscrits dans les fibres.

Une troisième méthode, connue sous le nom de méthode de variation du rapport cyclique, est présentée dans le document [8]. Le rapport cyclique étant défini sur une période du réseau comme le rapport entre la longueur de la partie de période où le coefficient de couplage est positif et la longueur de la partie de période où le coefficient de couplage est négatif, cette méthode consiste à faire varier ce rapport le long du parcours de la lumière.

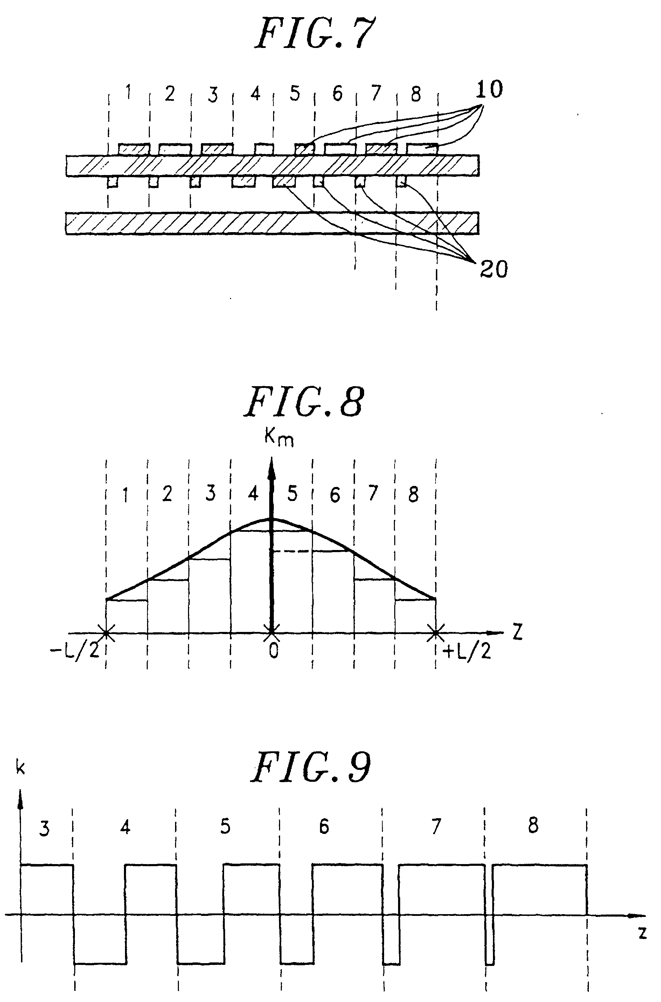

On a représenté sur la figure 7 un filtre optique à réseau de type connu, pour lequel une telle modification du rapport cyclique le long du filtre est appliquée.

Ce filtre est constitué d'un guide central bordé de portions aptes à modifier la valeur du coefficient de couplage dans les parties du guide central qui sont au niveau de ces portions.

Plus spécifiquement, les portions du guide central qui sont bordées à droite présentent un coefficient de couplage négatif et les portions du guide central bordées à gauche présentent un coefficient de couplage positif.

On peut considérer le guide central comme une succession de sections constituées chacune d'une partie de guide sur laquelle le coefficient de couplage est négatif suivie d'une partie de guide sur laquelle le coefficient de couplage est positif.

Sur les figures 7 à 9, on a tracé des traits en pointillé entre les sections successives qui constituent le filtre, et on a numéroté ces sections successives de 1 à 8.

Ces sections présentent toutes une même longueur. En d'autres termes, les portions latérales sont disposées de façon à ce que chaque paire constituée d'une portion droite et d'une portion gauche présente une longueur constante le long du guide.

On a représenté sur la figure 9 la répartition du coefficient de couplage le long du filtre, lorsque l'on parcourt le filtre dans le sens des numéros de sections croissantes depuis la section 4 jusqu'à la section 8.

Ainsi, le tracé de la figure 9 présente en abscisses une distance z mesurée le long du filtre dans le sens des numéros de sections croissantes, et en ordonnées la valeur du coefficient de couplage k au point considéré du guide.

Une section du filtre consiste donc en une succession de deux sous-sections, l'une où le coefficient de couplage est positif, l'autre où il est négatif, les amplitudes en valeur absolue étant sensiblement égales.

Les sections forment donc des lobes, chacun présentant une même amplitude, qui est constante le long du filtre.

Selon le principe connu de variation du rapport cyclique, le rapport entre la longueur du lobe négatif et la longueur du lobe positif au sein de chaque section n'est pas le même pour toutes les sections du réseau.

En d'autres termes, les sections centrales se divisent chacune en deux moitiés sensiblement égales, l'une sur laquelle le coefficient de couplage est négatif et l'autre sur laquelle le coefficient de couplage est positif, tandis que les sections situées aux extrémités du filtre présentent une forte différence de longueur entre leur partie à coefficient de couplage négatif et leur partie à coefficient de couplage positif.

Ainsi, comme on peut le voir sur la figure 7, la section présente une partie à coefficient de couplage positif qui est plus de deux fois plus longue que sa partie à coefficient de couplage négatif.

Cette disproportion entre la partie positive et la partie négative de chaque section est croissante lorsqu'on s'éloigne du centre du dispositif. En d'autres termes, le guide présente donc un rapport entre la longueur de la portion droite et la longueur de la portion gauche d'une paire considérée qui est maximal au centre du guide et diminue progressivement lorsqu'on se rapproche des extrémités du guide.

Ainsi, les sections gardant une longueur constante le long du filtre, la longueur de la partie à coefficient de couplage négatif diminue progressivement lorsqu'on s'éloigne du centre du dispositif, et la longueur de la partie à coefficient de couplage positif, complémentaire de la partie négative, présente une longueur qui augmente progressivement lorsqu'on s'éloigne du centre du dispositif.

Un coefficient de couplage moyen $Km^{(i)}$ défini comme la moyenne du coefficient de couplage sur une section d'indice i présente une répartition le long du guide qui est représentée sur la figure 8.

Conformément à la répartition du rapport cyclique, le coefficient de couplage $Km^{(i)}$ calculé sur chaque section d'indice i prend des valeurs faibles aux extrémités, et présente un maximum au centre du guide.

Une telle répartition du coefficient de couplage moyen sur chaque section est connue pour fournir une réponse spectrale apodisée.

Dans cette méthode, on garde une hauteur de réseau et une distance interguides constantes.

Cette méthode nécessite certes un contrôle des longueurs des sections qui est plus facile à réaliser que le contrôle des géométries mis en oeuvre dans les méthodes précédemment mentionnées. Il en est ainsi notamment pour les coupleurs co-directifs, où le réseau présente un pas qui est généralement de plusieurs dizaines de microns.

Cette méthode présente toutefois un inconvénient majeur, qui est que les dispositifs obtenus produisent fréquemment des pertes de rayonnement importantes.

De plus, dans les dispositifs obtenus par cette méthode, la longueur d'accord de phase change avec la valeur du rapport cyclique, ce qui n'est pas sans poser des problèmes supplémentaires lors de la conception du filtre. Ces problèmes sont exposés dans le document [8].

On a également proposé d'autres méthodes d'apodisation, qui sont similaires à la méthode de variation du rapport cyclique. Ces méthodes sont exposées dans les documents [10] à [12].

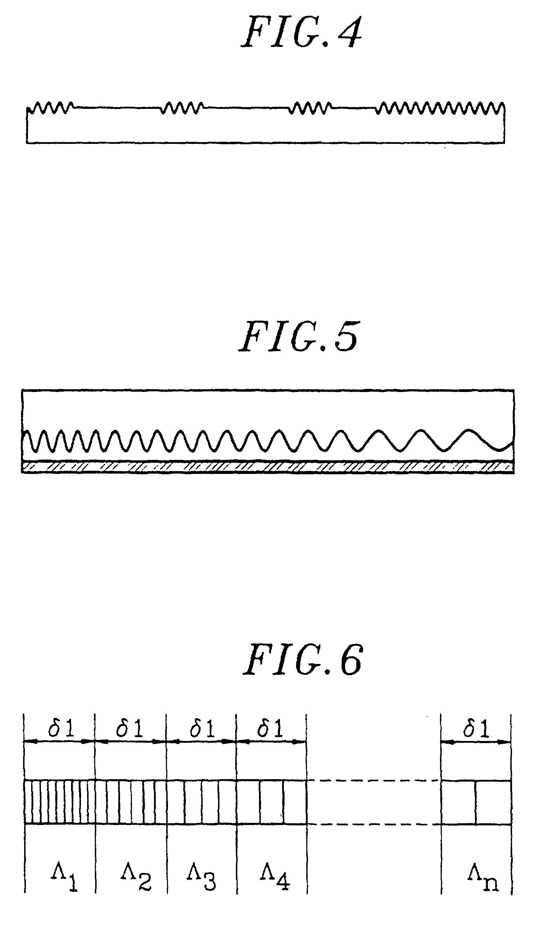

Dans l'une de ces méthodes, le filtre est composé de parties avec réseau et de parties sans réseau. L'apodisation est réalisée en faisant varier le rapport entre les longueurs des parties avec réseau et les longueurs des parties sans réseau le long du filtre. On a représenté schématiquement sur la figure 4 un filtre obtenu par cette méthode.

Ces filtres présentant de nombreuses sections sans réseau, ils ont l'inconvénient d'avoir une longueur totale particulièrement importante.

En outre, cette méthode ne semble pas permettre d'atteindre des niveaux d'apodisation des lobes secondaires qui soient supérieurs à 20 dB.

On connaît également des méthodes de modification de la réponse spectrale dans lesquelles on réalise un réseau dont la longueur de période, également appelée pas, varie le long du réseau, connues sous le nom de méthodes de «chirp». Ces méthodes sont couramment utilisées dans la réalisation de réflecteurs de Bragg.

On a proposé, dans les documents [13] et [14], de telles méthodes dans lesquelles on met en place une variation monotone croissante, linéaire ou quasi linéaire du pas du réseau, dans le but d'élargir la réponse spectrale du filtre. Le niveau des lobes secondaires n'est pas diminué dans cette méthode.

Des dispositifs obtenus par ces méthodes sont représentés sur les figures 5 et 6.

Dans ces méthodes, l'apodisation des lobes secondaires est en outre effectuée par des méthodes conventionnelles de variation du coefficient de couplage moyen par section, comme exposé dans le document [15].

Le but principal de la présente invention est de proposer un dispositif de filtrage optique à réseau, apodisé selon un procédé qui ne présente pas les inconvénients précédents.

Ce but est atteint selon l'invention grâce à un dispositif apte à être parcouru par une onde optique et à réaliser un filtrage en longueur d'onde de cette onde, dans lequel un paramètre optique du dispositif varie le long du parcours de l'onde de façon à ce que le dispositif présente une série de sections formées chacune de deux segments successifs, l'un où les valeurs du paramètre optique sont inférieures à une valeur moyenne; l'autre où les valeurs du paramètre optique sont supérieures à la valeur moyenne, caractérisé en ce que le dispositif présente au moins une zone où les sections ont des longueurs alternativement inférieures et supérieures à une longueur moyenne des sections sur cette zone, de façon à présenter une réponse spectrale apodisée.

D'autres caractéristiques, buts et avantages de l'invention apparaîtront à la lecture de la description détaillée qui va suivre, et en regard des dessins annexés donné à titre d'exemple non limitatif et sur lesquels

- la figure 1 est une vue de dessus d'un coupleur co-directif à distance inter-guides variable, conforme à l'état de la technique ;
- la figure 2 est une vue en coupe transversale selon un plan de coupe II-II indiqué sur la figure 1, du coupleur co-directif de la figure 1 ;
- la figure 3 est une vue en perspective d'un réflecteur de Bragg conforme à l'état de la technique ;
- la figure 4 est une vue schématique d'un dispositif connu conforme à la méthode de variation du coefficient de couplage par alternance de parties avec et sans réseau le long du dispositif
- la figure 5 est une représentation schématique d'un dispositif connu avec une variation («chirp ») linéaire du pas de réseau.
- la figure 6 est une vue de dessus d'un réseau connu à chirp quasi-linéaire, ici à variation échantillonnée ou en escalier du pas du réseau ;
- la figure 7 est une vue de dessus d'un guide connu muni de portions latérales gauches et droites alternées ;
- la figure 8 est un tracé de la répartition d'un coefficient de couplage moyen par section le long du filtre de la figure 7
- la figure 9 est un tracé de la répartition du coefficient de couplage dans une moitié du filtre de la figure 7.
- la figure 10 est une vue de dessus d'un coupleur co-directif à réseau conforme à l'invention ;
- la figure 11 est un tracé de la répartition de coefficient de couplage le long du filtre de la figure 10.
- La figure 12 est un tracé de la répartition de la longueur des sections le long du filtre de la figure 10
- La figure 13 est une vue de dessus d'un filtre à oscillation de la distance interguide apodisé conformément à l'invention.
- la figure 14 est une coupe transversale d'un laser à cavité verticale dans lequel des miroirs de Bragg sont réalisés par une alternance de couches de AlAs et de GaAs ;
- La figure 15 est un tracé de la répartition des longueurs des sections dans un coupleur codirectif apodisé conformément à la présente invention.
- La figure 16 est un tracé de la réponse spectrale de ce même coupleur co-directif ainsi que de la réponse spectrale d'un coupleur co-directif correspondant non apodisé.
- La figure 17 est un tracé de la répartition des longueurs des sections dans un reflecteur de Bragg à 80 sections conforme à la présente invention.
- La figure 18 est un tracé de la réponse spectrale de ce même réflecteur de Bragg ainsi que de la réponse spectrale d'un réflecteur de Bragg correspondant non apodisé.
- La figure 19 est un tracé de la répartition des longueurs des sections dans un réflecteur de Bragg conforme à l'invention ayant 180 sections.
- La figure 20 est un tracé de la réponse spectrale du réflecteur de Bragg de la figure 19 ainsi que de la réponse spectrale d'un réflecteur de Bragg correspondant et non apodisé.

- La figure 21 est un tracé de la réponse spectrale d'un miroir de Bragg à 80 paires de bicouches conforme à l'invention ainsi que d'un miroir de Bragg correspondant non apodisé.
- La figure 22 est un tracé de la réponse spectrale d'un miroir de Bragg à 10 couches conforme à l'invention, ainsi que d'un miroir de Bragg correspondant non apodisé.
- La figure 23 est une vue de côté d'un coupleur codirectif avec réseau rectangulaire conforme à l'état de la technique.

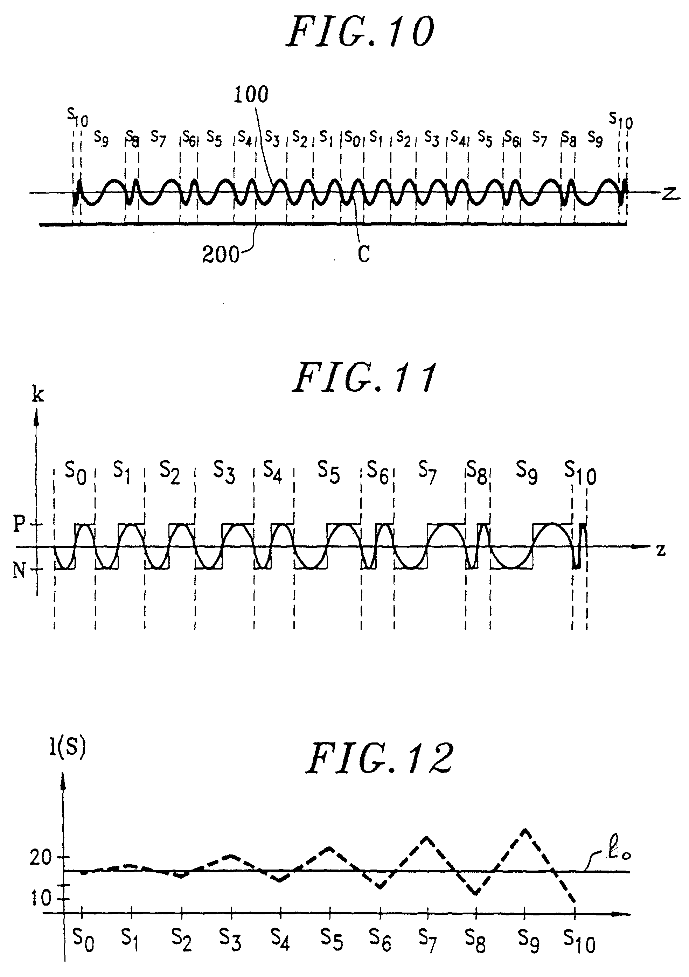

On a représenté sur la figure 10 un coupleur co-directif conforme à la présente invention. Ce coupleur comporte, de manière connue, un premier guide d'onde 100 décrivant des ondulations transversalement à un axe principal longitudinal Z de ce guide, et un second guide d'onde 200, rectiligne, qui s'étend parallèlement à la direction principale longitudinale Z du premier guide d'onde 100.

De manière connue, ce dispositif est le siège d'un couplage entre les deux guides d'ondes 100 et 200 propre à fournir dans le premier guide 100 une répartition du coefficient de couplage selon une fonction qui est oscillatoire le long du trajet de la lumière.

Plus précisément, le signe du coefficient de couplage en un point quelconque du guide 100 dépend du côté où se trouve ce point du guide 100 par rapport à l'axe principal longitudinal Z de ce guide.

Dans les parties du guide oscillant 100 qui sont situées entre l'axe principal Z et le guide rectiligne 200, le coefficient de couplage est positif, tandis que dans les parties du guide oscillant 100 qui sont opposées au guide rectiligne 200 par rapport à l'axe Z, le coefficient de couplage est négatif.

Sur la figure 10, on définit des sections comme une suite de deux portions successives du filtre sur lesquelles le coefficient de couplage prend respectivement des valeurs négatives et des valeurs positives.

Compte tenu de la correspondance entre le signe du coefficient de couplage en un point du guide 100 et le côté de l'axe Z où se trouve ce point du guide 100, on définit une section sur le guide 100 en termes géométriques comme étant une succession de deux lobes successifs du guide oscillant situés de part et d'autre de l'axe Z.

Ces sections ont été séparées par des traits discontinus et transversaux sur la figure 10 et référencées de $S_{-10}$ à $S_{10}$ en passant par $S_0$, lorsqu'on parcourt le guide d'une extrémité gauche à une extrémité droite. La section $S_0$ est ainsi une section centrale du filtre, la section $S_{10}$ est une section d'extrémité droite et la section $S_{-10}$ une section d'extrémité gauche.

L'ensemble des sections $S_0$ à $S_{10}$ constitue donc une moitié droite du guide.

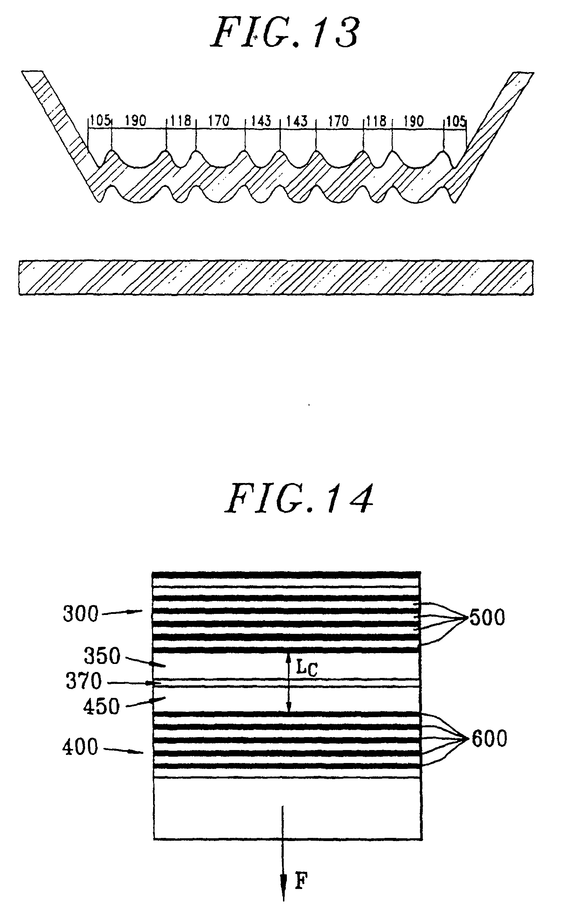

On a représenté sur la figure 11 un tracé de la variation du coefficient de couplage le long du parcours de la lumière dans cette moitié du filtre constituée par les segments $S_0$ à $S_{10}$.

La répartition du coefficient de couplage dans l'autre moitié du filtre n'a pas été représentée, elle est facilement déduite par symétrie du tracé de la figure 11 par l'homme du métier.

Le tracé de la figure 11 présente en abscisses une distance z mesurée le long du filtre et en ordonnées la valeur k du coefficient de couplage au point considéré d'abscisse z le long du filtre.

Il existe une correspondance directe entre la figure 10 représentant le filtre selon l'invention et la figure 11 représentant la variation du coefficient de couplage le long du filtre.

On a ainsi mis en évidence également par des traits transversaux la répartition des sections le long du tracé de la figure 11.

Le dispositif de la figure 10 et le tracé de répartition du coefficient de couplage de la figure 11 présentent donc chacun un découpage en sections, ces deux découpages en sections étant correspondants.

Les inventeurs ont découvert qu'en adoptant une répartition particulière des longueurs des sections le long du filtre, on obtient une réponse spectrale dont les lobes secondaires sont nettement réduits par rapport à la réponse spectrale d'un filtre traditionnel correspondant, c'est à dire un filtre ayant sensiblement la même longueur moyenne des sections mais ne présentant pas cette répartition particulière.

On appelle de manière courante « pas du réseau » la longueur constante des sections successives. On qualifiera également de pas, dans la suite de cette description, une longueur de section du filtre, bien que dans l'invention ce « pas » ne soit pas constant sur l'ensemble du filtre. Les sections des figures 10 et 11 présentent ainsi des pas différents selon les sections.

On décrira maintenant cette répartition particulière des longueurs des sections, conforme à l'invention.

Comme on peut le constater sur les figures 10 et 11, les longueurs des sections sont telles que lorsqu'on parcourt le guide dans sa longueur, se succèdent alternativement une section courte et une section longue.

En d'autres termes, la longueur d'une section varie de manière oscillatoire lorsque l'on parcourt le réseau.

Plus précisément, sur la figure 10, si on choisit un groupe quelconque de sections successives, et que l'on détermine la longueur moyenne des sections sur ce groupe, les sections présentent sur ce groupe des longueurs qui alternent autour de la longueur moyenne des sections du groupe.

En d'autres termes, lorsqu'on parcourt le filtre dans ce groupé de sections choisis, on passe d'une section ayant une longueur inférieure à la longueur moyenne, à une section ayant une longueur supérieure à la longueur moyenne, puis on repasse à une section ayant une longueur inférieure à la longueur moyenne, et ainsi de suite.

Sur une partie quelconque du filtre de la figure 10, les sections présentent une répartition de leur longueurs le long du filtre qui est oscillante autour d'une longueur de section moyenne.

On a tracé sur la figure 12 la répartition des longueurs des sections le long de la moitié droite du filtre de la figure 10.

Ce tracé présente en abscisse les références des sections successives $S_0$ à $S_{10}$, et en ordonnées les longueurs de chacune de ces sections $S_0$ à $S_{10}$.

On a tracé sur la figure 12 une droite horizontale dont l'ordonnée lo correspond à la longueur moyenne des sections $S_0$ à $S_{10}$.

On constate que ce tracé est oscillant, c'est à dire que les longueurs des sections sont alternativement inférieures et supérieures à cette valeur moyenne. Les points correspondants à deux sections successives sont alternativement raccordés par un segment croissant et par un segment décroissant.

Il n'est pas nécessaire selon l'invention que les longueurs des sections soient oscillantes sur l'ensemble du réseau, une telle répartition oscillatoire s'avère également avantageuse lorsqu'elle n'est mise en oeuvre que sur une partie du réseau.

Les inventeurs ont découvert qu'en réalisant un réseau optique dans lequel les longueurs des sections oscillent autour d'une valeur moyenne sur au moins une partie du guide, on obtient une réponse spectrale nettement améliorée par rapport à celle d'un guide similaire dans lequel aucune partie ne présente une telle caractéristique.

Les inventeurs ont ainsi comparé un premier filtre à réseau dans lequel le coefficient de couplage oscille de façon traditionnelle le long du réseau, c'est à dire où la longueur des sections est constante le long du filtre, et un second filtre similaire au premier à la différence qu'il présentait une partie du réseau où les longueurs des sections alternaient autour d'une valeur moyenne.

Ils ont pu constater que la réponse spectrale du second filtre présentait des lobes secondaires nettement amoindris par rapport à celui du premier filtre.

La répartition des longueurs des sections sur une telle partie présente avantageusement une caractéristique supplémentaire selon laquelle les longueurs des sections oscillent autour d'une longueur moyenne avec une amplitude d'oscillation qui est croissante lorsque l'on parcourt cette partie en éloignement du centre du filtre.

Ainsi, sur la figure 12, la section centrale $S_0$ présente une longueur sensiblement égale à la longueur moyenne M des sections, les sections $S_1$ et $S_2$ présentent des écarts à la longueur moyenne M qui sont relativement faibles, tandis que les sections $S_9$ et $S_{10}$ proches de l'extrémité droite du guide présentent des longueurs fortement éloignées de la longueur moyenne M des sections.

Les longueurs des sections $S_0$ à $S_{10}$ alternent donc autour de la longueur moyenne M en présentant un écart avec celle-ci qui est d'autant plus grand que l'on s'éloigne du centre C du guide.

En d'autres termes, si on mesure, pour chaque section $S_0$ à $S_{10}$, la différence entre la longueur de cette section et la longueur moyenne M des sections $S_0$ à $S_{10}$, la valeur absolue de cette différence est croissante sur toute la partie du dispositif allant de la section $S_0$ à la section $S_{10}$.

Sur la figure 12, on remarque que si l'on calcule la valeur du rapport des longueurs de deux sections successives, c'est à dire le rapport de la longueur supérieure sur la longueur inférieure, la valeur de ce rapport augmente lorsque l'on parcourt le filtre du centre vers une extrémité.

Les inventeurs ont pu constater que le fait de réaliser, au sein du filtre, au moins une partie où les sections présentent une oscillation de leurs longueurs avec un écart à la moyenne des longueurs sur cette partie qui est croissante en valeur absolue lorsqu'on parcourt cette partie en éloignement du centre du filtre, permet d'améliorer l'apodisation du filtre

Dans l'exemple de réalisation préférentiel décrit ici en référence aux figures 10 à 12, la différence entre la longueur d'une section considérée et la longueur moyenne des sections part de la valeur zéro au niveau du centre du dispositif, et atteint son maximum au niveau de la section d'extrémité $S_{10}$.

Le fait que cette différence entre la longueur de chaque section et la longueur moyenne des sections présente, en valeur absolue, une croissance monotone depuis le centre du dispositif et jusqu'à l'extrémité du filtre, c'est à dire sur l'ensemble d'au moins une moitié du filtre, est une disposition avantageuse pour l'obtention d'une réponse spectrale nettement apodisée.

Il n'est pas nécessaire que cette différence atteigne un maximum aux extrémités du filtre, toutefois cette disposition est avantageuse en termes de qualité d'apodisation.

De plus, il n'est pas nécessaire non plus que les sections du centre présentent des longueurs égales à la longueur moyenne des sections sur le filtre, en d'autres termes que la différence précédemment définie soit nulle au centre du dispositif, toutefois cette disposition est avantageuse en termes de qualité d'apodisation.

Dans l'exemple préférentiel décrit ici, la différence de longueur en valeur absolue entre une section considérée et la longueur moyenne présente en valeur absolue une croissance linéaire depuis le centre du filtre jusqu'à chacune des extrémités de celui-ci.

Les longueurs des sections oscillent donc autour de la longueur moyenne avec une amplitude qui croît linéairement depuis le centre du dispositif jusqu'à chacune des extrémités du filtre.

La répartition des longueurs des sections est donnée ici par la formule $l(s) = l_0 x(1 +_\varepsilon(s)x(-1)^s)$, dans laquelle $l(s)$ est la longueur d'une section d'indice s, où s correspond à une numérotation de 1 à N des sections du réseau d'une extrémité à une autre du réseau, et où lo est la moyenne des longueurs des sections du réseau et où $\varepsilon(s)$ est la différence relative de longueur d'une section S par rapport à la longueur moyenne lo.

$\varepsilon(s)$ est donnée par $\varepsilon(s) = cx[2x(s-0,5-(N/2))/N]$, N étant le nombre total de sections du réseau, et c étant une constante.

c est appelé chirp, en référence à la méthode connue de « variation du chirp », bien que dans cette méthode de l'art antérieur les longueurs des sections ne présentent pas une répartition oscillatoire mais une répartition monotone croissante ou monotone décroissante.

Il est à la portée de l'homme de l'art d'appliquer les formules ci-dessus à la réalisation d'autres filtres à réseaux, notamment à des réseaux répondant au formalisme des modes couplés, c'est à dire des réseaux qui sont le siège de variations du coefficient de couplage le long du trajet de la lumière.

Un dispositif apodisé conformément à l'invention peut facilement être réalisé à partir d'un réseau connu en modifiant légèrement la répartition des longueurs des sections le long du réseau.

En effet, à partir d'un dispositif à réseau de type traditionnel non apodisé, l'homme de l'art sait parfaitement identifier les sections conformes à la définition donnée précédemment en référence à la répartition du coefficient de couplage et déterminer la longueur moyenne lo des sections sur ce réseau traditionnel.

L'homme de l'art peut alors réaliser conformément à l'invention un dispositif à réseau similaire à ce réseau traditionnel à la différence que les longueurs des sections soient oscillantes le long du réseau, par exemple selon les formules proposées précédemment. En utilisant les formules de répartition données ci-avant, l'homme de l'art n'a alors qu'à adopter une valeur de chirp c qui soit adaptée à la nature et à la taille de son réseau pour obtenir une réponse spectrale efficacement apodisée par rapport à celle du réseau initial.

On a ainsi représenté à la figure 13 un coupleur codirectif conforme à l'invention réalisé à partir d'un coupleur codirectif classique non apodisé de longueur moyenne de section lo, également appelée « valeur moyenne de pas de réseau », égale à 150 µm.

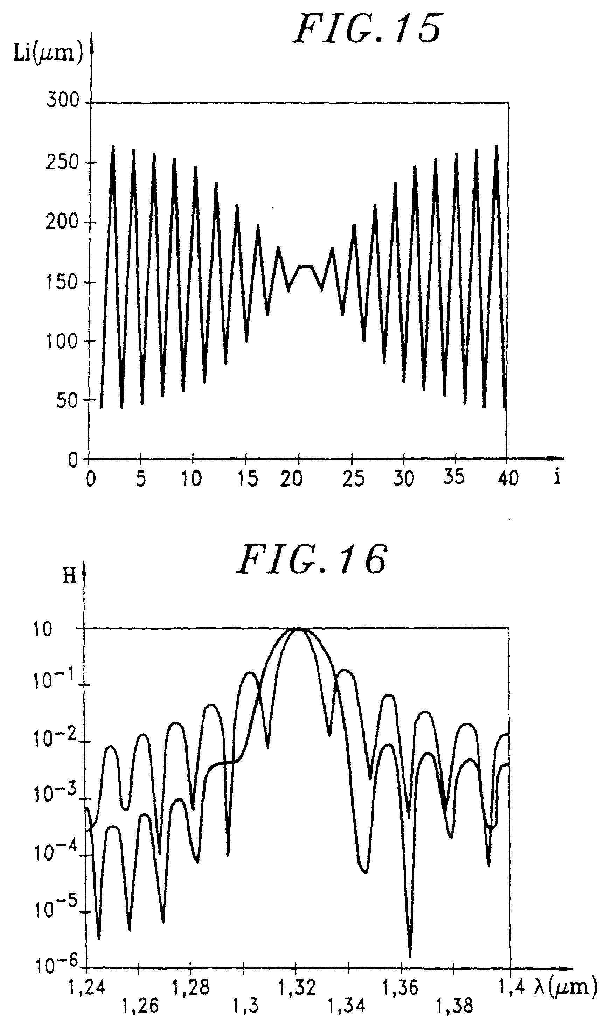

On a par ailleurs représenté sur la figure 15 un tracé de la répartition des longueurs des sections le long d'un réseau d'un coupleur codirectif similaire à celui de la figure 13, comportant cette fois 40 sections.

Ce coupleur codirectif apodisé conformément à l'invention présente une longueur de section $l(s)$ répartie le long du réseau selon la formule :

$$l(s) = l_0 \times (1 + {}_\varepsilon(s) \times (-1)^s)$$

où lo est la longueur de pas du réseau du coupleur non apodisé initial et où ${}_\varepsilon(s)$ est la variation relative du pas du réseau et est donnée par : $\varepsilon(s) = c.\sin(\pi.(s-0.5-N/2)/N)$. La longueur moyenne des sections du réseau est égale à 150 µm. Le coefficient c est ici égal à -0,72 (72%).

Sur le tracé de la figure 15, les sections sont numérotées de 1 à 40 d'une extrémité à l'autre du réseau. Ce tracé présente en ordonnées les longueurs $L_i$ des sections d'indices i mesurées en micromètres.

La figure 16 représente en trait continu le spectre de ce coupleur codirectif à 40 sections conforme à l'invention (= Fig. 15) et en trait discontinu le spectre d'un coupleur codirectif similaire mais ayant un pas de réseau constant et égal à 150 µm.

On remarque que les lobes secondaires du spectre du coupleur apodisé sont d'amplitude nettement réduite. Dans cet exemple de réalisation, on obtient un niveau d'apodisation des premiers lobes secondaires qui est compris entre 20 et 30 dB.

D'une manière plus générale, pour un coupleur co-directif l'application de la formule précédente avec un coefficient de chirp c compris entre -1 et 1 permet d'obtenir des niveaux d'apodisation des premiers lobes secondaires compris entre 20 et 30 dB.

Les inventeurs ont également réalisé un réflecteur de Bragg dans lequel les longueurs des sections étaient réparties de manière oscillante avec une amplitude répartie linéairement selon les formules :

$$l(s) = lo (1 + {}_\varepsilon(s)(-1)^S)$$

et

$$\varepsilon(s) = c(2(s-0,5-(N/2))/N)$$

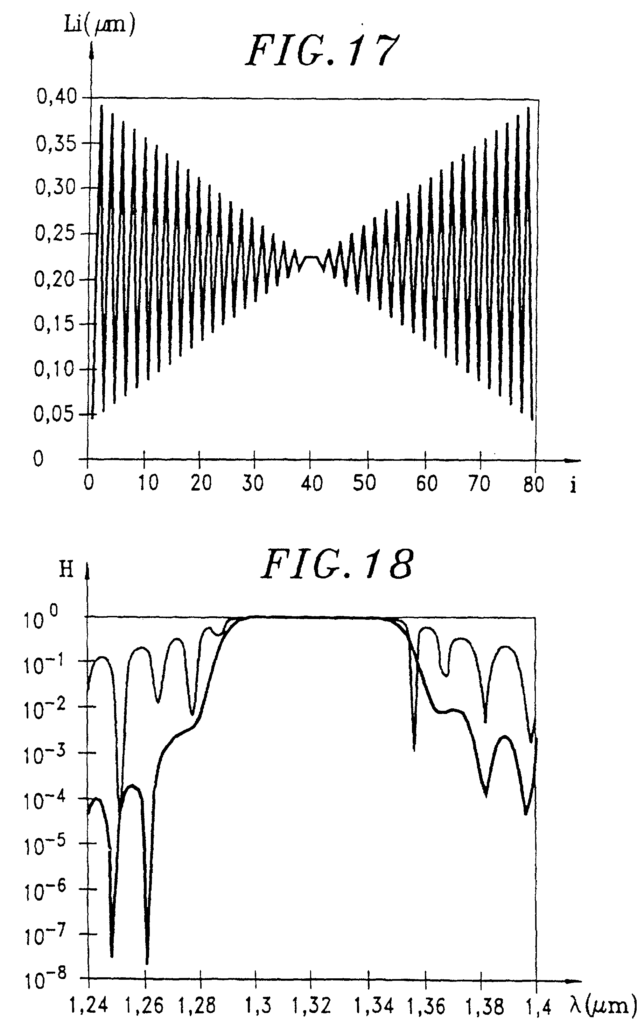

On a représenté sur la figure 17 un tracé de la répartition du pas de réseau d'un tel réflecteur de Bragg à 80 sections selon un coefficient de chirp c égal à -0,85 et pour une longueur moyenne des sections de 0,22 μm.

Sur la figure 18, on a représenté le spectre d'un tel réflecteur de Bragg en trait continu ainsi que, en trait pointillé, le spectre d'un réflecteur de Bragg de longueur de section constante et égale à 0,22 μm. Le niveau d'apodisation des lobes secondaires obtenu est de l'ordre de 30 à 50 dB.

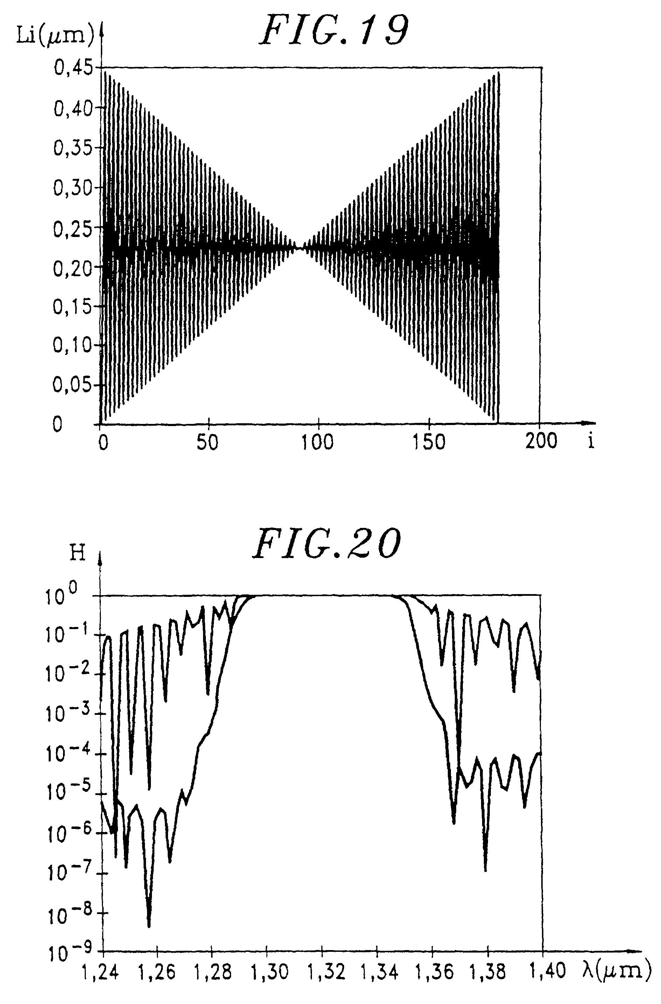

On a représenté sur la figure 19 une répartition des longueurs des sections à amplitude linéairement croissante depuis le centre du dispositif au sein d'un réflecteur de Bragg ayant un nombre de sections égal à 180, une longueur moyenne des sections de 0,22 μm sur l'ensemble du réflecteur et un coefficient de chirp c de -0,98.

Sur la figure 20, on a représenté les spectres respectifs de ce réflecteur de Bragg apodisé ainsi que d'un réflecteur de Bragg de même longueur moyenne de section et dans lequel les sections ont une longueur constante égale à cette moyenne. Là encore, le niveau d'apodisation des lobes secondaires est compris entre 30 et 50 dB.

On remarque sur les figures 18 et 20 que les réflecteurs de Bragg selon l'invention ne présentent aucun élargissement du spectre par rapport aux réflecteur initiaux de type connus, contrairement à l'effet obtenu avec une variation des longueurs des sections selon la méthode du chirp. Le dispositif selon l'invention présente même une largeur de spectre légèrement plus faible que le dispositif non apodisé correspondant.

L'invention ne se limite pas aux exemples de réalisation donnés ci-dessus concernant des dispositifs répondant au formalisme des modes couplés, dans lesquels le paramètre optique variant le long du réseau est le coefficient de couplage.

Elle s'adresse de manière plus générale aux dispositifs constituant des filtres optiques et présentant un réseau, en d'autres termes les dispositifs dans lesquels un paramètre optique alternant autour d'une valeur moyenne le long du trajet de la lumière est un autre paramètre que le coefficient de couplage.

L'invention ne se limite pas non plus aux dispositifs au sein desquels les oscillations du paramètre optique découlent de variations géométriques du dispositif le long du trajet de la lumière.

De manière générale, l'homme de l'art saura identifier au sein de nombreux dispositifs optiques, une variation d'un paramètre optique le long du trajet de la lumière qui soit propre à constituer une série de sections consécutives, où une section est définie comme une partie constituée de deux segments consécutifs, l'un ou le paramètre prend des valeurs supérieures et l'autre où le paramètre prend des valeurs inférieures à une valeur moyenne du paramètre.

En reprenant dans de tels dispositifs une répartition de type oscillatoire des longueurs des sections, on réalise des dispositifs dont la réponse spectrale présente une apodisation nette par rapport à un dispositif où les sections ont des longueurs ne présentant pas une telle répartition.

L'invention s'adresse ainsi par exemple à la réalisation d'un laser à cavité verticale VECSEL. Un tel dispositif contient, comme on peut le voir sur la figure 14, deux miroirs de Bragg 300 et 400 consistant chacun en une succession alternée de couches de AlAs référencées 500 et de couches de GaAs référencées 600.

Entre ces deux miroirs de Bragg 300 et 400 sont disposées deux couches d'espacement 350 et 450 qui prennent en sandwich une couche active 370 .

Sur la figure 14, on a représenté la direction du parcours de la lumière à travers le dispositif par une flèche F.

Au sein des miroirs de Bragg, l'indice de réfraction présente de manière connue une oscillation autour d'une valeur moyenne le long du parcours de la lumière.

Le paramètre oscillant étant ici l'indice de réfraction, et un couple de couches, l'une de AlAs et l'autre de GaAs, étant le siège d'une variation de l'indice de réfraction comprenant une partie à indice fort et une partie à indice faible, chacun de ces couples de couches constitue une section conforme à la définition donnée ci-avant.

Une répartition des longueurs de ces sections, mesurée parallèlement au trajet de la lumière, c'est à dire dans cette application une répartition de l'épaisseur d'une bicouche AlAs/GaAs, réalisée de manière oscillatoire sur au moins une partie de miroir, permet une amélioration nette de sélectivité en longueur d'onde du miroir concerné par rapport à un miroir à épaisseur de bicouches constante et ayant une même valeur moyenne des épaisseurs des bicouches.

On a décrit dans le préambule de la description une méthode connue d'élargissement de la réponse spectrale appelée « méthode du chirp». Dans cette méthode, la longueur des sections varie de façon monotone selon une fonction généralement linéaire définie par les formules suivantes :

$$l(s) = l_0 (1 + \varepsilon(s))$$

$$\varepsilon(s) = c(2(S-0,5-N/2)/N)$$

c représente, dans les dispositifs correspondant à la méthode de chirp connue, aussi bien que dans les dispositifs de la présente invention, la différence maximale de longueur d'une section par rapport à la longueur moyenne des sections, cette différence étant divisée par la longueur moyenne des sections du reseau.

c représente donc l'écart maximal à la valeur moyenne des sections, de la longueur des sections, écart rapporté en valeur relative à la longueur moyenne des sections. Le coefficient de chirp c utilisé dans le réflecteur de Bragg selon l'invention, décrit précédemment, a ainsi une valeur qui est d'1 à 2 ordres de grandeur plus forte par rapport aux valeurs du coefficient c utilisées généralement dans la méthode du chirp connue.

Dans cette méthode connue, le coefficient de chirp a donc une valeur beaucoup plus faible que les valeurs de c utilisées dans les dispositifs selon l'invention présentés ici.

L'invention présente donc l'avantage que pour effectuer une apodisation d'un filtre tel qu'un réflecteur de Bragg, on utilise de grandes valeurs de chirp, ce qui rend le filtre moins sensible aux erreurs et imprécisions de fabrication.

Comme on peut le constater sur la figure 11, à l'intérieur de chaque section, le segment sur lequel le coefficient de couplage est négatif et le segment sur lequel le coefficient de couplage est positif sont de même longueur.

Ainsi, si l'on considère au sein du groupe de sections $S_0$ à $S_{10}$, les longueurs des segments à coefficient de couplage positif, (plus généralement, les segments où la valeur du paramètre optique est supérieure à une valeur moyenne de ce paramètre sur une zone du filtre allant de $S_0$ à $S_{10}$), on note que ces segments présentent une répartition de leurs longueurs qui est oscillatoire autour d'une longueur moyenne de ces segments à valeurs positives du paramètre optique, sur le groupe de sections.

En d'autres termes, ces segments à valeurs positives du coefficient de couplage, présentent, lorsqu'on parcourt les sections $S_0$ à $S_{10}$, des longueurs alternativement inférieure et supérieure à une longueur moyenne de ces segments, lorsqu'on passe d'un segment à valeurs positives au segment à valeurs positives suivant.

De la même façon, les segments à coefficient de couplage négatif présentent également une répartition de leurs longueurs qui alterne autour d'une longueur moyenne de ces segments à coefficient négatif, lorsque l'on passe d'un segment à valeurs négatives au segment à valeurs négatives suivant.

Ainsi, dans le cas du dispositif de la figure 11, les sections sont chacune constituées de deux segments, l'un à valeurs positives du coefficient de couplage, l'autre à valeurs négatives du coefficient de couplage, et chacun de ces deux types de segments présente le long du filtre une répartition de longueurs qui est oscillatoire.

Plus précisément, on passe alternativement d'une section dont les segments ont tous deux des longueurs faibles à une section dont les segments sont tous deux des longueurs élevées.

Plus généralement, dans un dispositif à réseau, on adopte avantageusement une zone où la répartition de longueurs de sections et des segments constituant ces sections, est telle que les segments à valeurs du paramètre optique supérieures à une moyenne sur la zone présentent des longueurs qui alternent autour d'une longueur moyenne de ces segments. Cette disposition est de même avantageusement adoptée pour les segments à valeurs de paramètre optique inférieures à une moyenne sur la zone.

Chacune des sections est constituée ici de deux segments de longueurs sensiblement égales, l'un où le coefficient de couplage est positif, l'autre où le coefficient de couplage est négatif.

On comprend donc qu'il n'est pas nécessaire dans les dispositifs selon l'invention de mettre en oeuvre une variation du coefficient de couplage moyen calculé sur chacune des sections.

Il est toutefois possible de réaliser un dispositif dans lequel les segments où le coefficient de couplage est positif (respectivement négatif) restent d'une longueur constante d'une section à l'autre, et dans lequel seules les longueurs des segments où le coefficient de couplage est négatif (respectivement positif) ont cette répartition de type oscillatoire. Dans un tel cas, les longueurs des pas du réseau, qui sont la somme des longueurs de deux segments consécutifs, l'un où le coefficient est positif et l'autre où il est négatif, vont avoir une répartition de type oscillatoire conforme à l'invention.

Comme le rapport entre les longueurs des deux sous sections n'est plus, dans un tel cas, constant le long du dispositif, on réalise dans un tel cas une variation du rapport cyclique et par conséquent une variation de coefficient de couplage moyen par section.

Une réalisation dans laquelle les longueurs des segments où le coefficient de couplage est positif ont la même répartition de type oscillatoire que les longueurs des segments où le coefficient est négatif est toutefois plus avantageuse en termes de qualité de réponse spectrale. En d'autre termes, il est préférable de ne mettre en place aucune variation du rapport cyclique du coefficient de couplage au sein du réseau.

D'autre part, dans le dispositif des figures 10 à 12, si l'on considère les segments à valeurs positives du coefficient de couplage, ceux-ci présentent une répartition de leurs longueurs qui est oscillante avec une amplitude croissante des oscillations de longueurs lorsqu'on s'éloigne d'une partie centrale du dispositif. De même, les segments à valeurs de coefficient de couplage négatif présentent également une telle répartition.

Plus généralement, les inventeurs ont pu constater que pour un dispositif à réseau, c'est à dire un dispositif où un paramètre optique varie le long du réseau conformément à une répartition en sections, on réalise avantageusement en termes de qualité de réponse spectrale, un tel dispositif en adoptant pour les longueurs des segments à valeurs du paramètre optique supérieures à une valeur moyenne M du paramètre sur un groupe de sections des longueurs oscillant alternativement autour d'une longueur moyenne de ces segments, avec une amplitude d'oscillation croissante lorsque l'on s'éloigne d'une partie centrale du dispositif.

De même, les longueurs des segments où le paramètre optique est inférieur à la valeur moyenne de ce paramètre présentent avantageusement une telle répartition, c'est à dire que les longueurs de ces segments à valeurs de paramètre optique inférieures à une valeur moyenne M du paramètre oscillent alternativement autour d'une longueur moyenne de ces segments avec une amplitude d'oscillation croissante lorsque l'on s'éloigne d'une partie centrale du dispositif.

Comme on l'a précisé précédemment, les sous sections ou segments de chaque section du dispositif selon l'invention, qui présentent des valeurs respectivement supérieures et inférieures à une moyenne du paramètre optique sont préférentiellement de même longueur au sein d'une même section, contrairement aux dispositifs réalisés selon la méthode de variation du rapport cyclique.

Il n'est donc pas nécessaire d'introduire une variation précise du rapport entre les longueurs des deux sous sections au sein des sections successives. Ainsi, le coefficient de couplage moyen calculé sur chaque section reste constant d'une section à l'autre.

La réalisation d'un tel filtre selon l'invention ne nécessite qu'un contrôle des longueurs des sections, sans aucune recherche fastidieuse d'une répartition particulière des valeurs de coefficient de couplage. Les sections ayant des dimensions plus importantes que les sous parties des sections ci-dessus mentionnées, le respect des dimensions dans la fabrication d'un tel filtre est donc plus aisé, et par conséquent cette fabrication est plus fiable que celle des filtres à variation du rapport cyclique.

Ainsi, dans le procédé de réalisation d'un réseau selon l'invention, la modulation sur le pas du réseau est particulièrement aisée à contrôler, notamment dans le cas des coupleurs codirectifs où le pas du réseau est généralement élevé, typiquement de plusieurs dizaines de microns.

La fabrication d'un filtre selon l'invention peut également être réalisée en évitant aisément des erreurs telles que celles qui prennent naissance dans les dispositifs où une variation de la distance interguide doit être contrôlée, tels que les coupleurs co et contradirectifs à réseau.

Le procédé de réalisation d'un réseau selon l'invention permet de réaliser de manière simple des coupleurs co et contradirectifs verticaux ainsi que des réseaux sur fibres,

Ainsi, le procédé de réalisation d'un filtre selon l'invention s'applique à tout dispositif où on retrouve une périodicité d'un paramètre optique analogue à celle d'un réseau.

Parmi les dispositifs qui ne sont pas décrits par le formalisme des modes couplés, les inventeurs ont pu effectuer l'apodisation des lobes secondaires d'un miroir de Bragg tels que ceux qui constituent le miroir de Bragg de la figure 14.

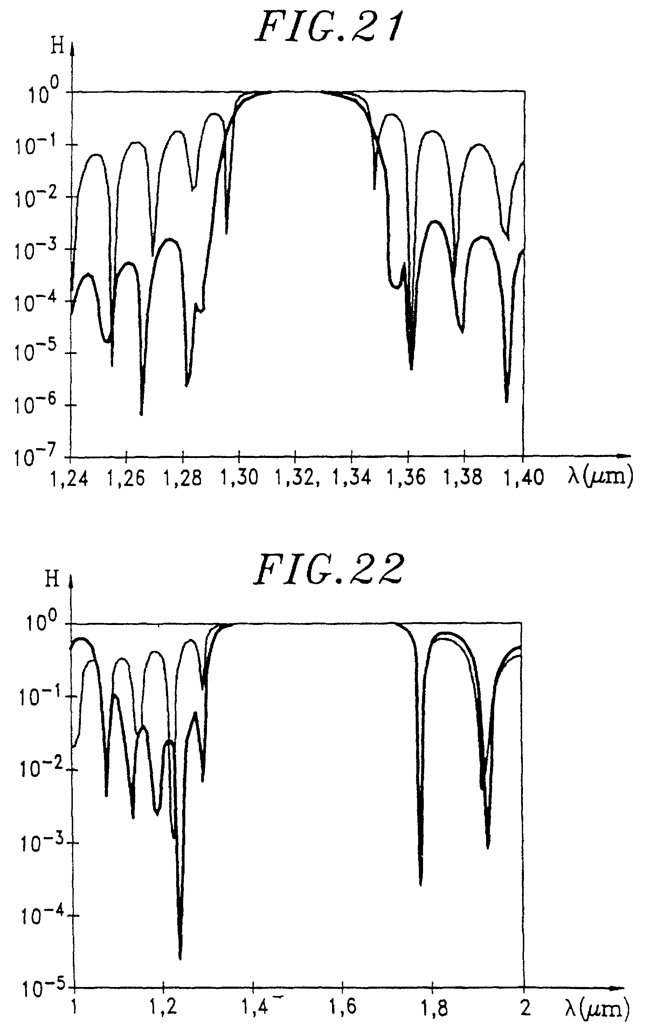

Une telle apodisation est particulièrement attractive pour réaliser par exemple un réflecteur à une longueur d'onde et ayant une bonne transmission à une seconde longueur d'onde. On a tracé sur les figures 21 et 22 des simulations de spectres de tels miroirs de Bragg.

Sur la figure 21, on a tracé en trait continu une simulation de spectres d'un miroir de Bragg composé de 80 paires de bicouches de deux matériaux ayant des indices 3,22 et 3,38. Plus précisément, on a tracé le spectre d'un tel miroir dans lequel l'épaisseur des bicouches varie selon les formules :

$$l(s) = lo \, (1 + \varepsilon(s)(-1)^s)$$

et

$$\varepsilon(s) = c(2(S-0,5-N/2)/N)$$

avec un coefficient de chirp c = -0,8.

Sur cette même figure, on a tracé en trait discontinu le spectre simulé d'un miroir de Bragg similaire mais ayant une répartition uniforme des longueurs des sections. On constate sur cette figure le niveau d'apodisation particulièrement élevé obtenu grâce à l'invention. Cet exemple simule en particulier une situation réelle d'un miroir de Bragg épitaxié pour laser VCSEL, application pour laquelle un tel miroir est particulièrement adapté.

Sur la figure 22, on a tracé un spectre simulé pour un empilement de seulement dix bicouches ayant des indices de 1,46 et 2,2. La variation d'épaisseur des bicouches est toujours réalisée selon les mêmes formules que dans le cas précédent, avec un coefficient de chirp de c=-0,25. Cet exemple de réalisation de l'invention est particulièrement adapté pour réaliser un miroir diélectrique à base de $SiO_2$ et $TiO_2$.

Dans les méthodes d'apodisation mentionnées précédemment, comme la méthode de variation du rapport cyclique, on met en oeuvre une variation de la valeur moyenne du coefficient de couplage sur chaque section.

Dans les exemples de réalisation de l'invention proposés ci-avant, cette valeur moyenne du coefficient de couplage sur chaque section reste constante et c'est seulement dans le cadre d'un coefficient de couplage défini séparément sur chaque section qu'on peut dire que le coefficient de couplage moyen par section est constant.

On peut définir le coefficient de couplage moyen d'une section de manière plus précise comme étant le premier coefficient de Fourier sur une période du réseau de la transformation de Fourier du coefficient de couplage.

Nous allons ci-après préciser comment on détermine le coefficient de couplage moyen par section dans le cas d'un réseau quelconque répondant au formalisme des modes couplés.

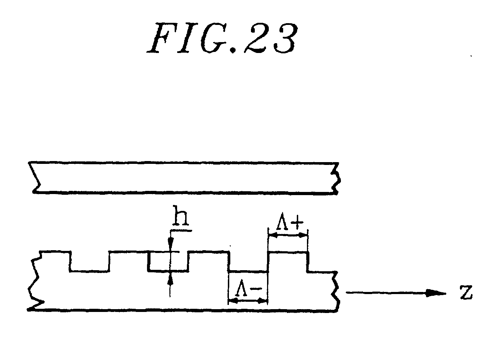

Prenons l'exemple d'un coupleur codirectif avec un réseau rectangulaire tel que celui représenté à la figure 23. On peut exprimer l'indice de réfraction n donné ici d'un tel coupleur par la formule :

$$n^2(x,y,z) = \underline{n}^2(x,y) + \eta^2(x,y) * f(z)$$

Où $\underline{n}$ est l'indice de la structure uniforme et $\eta$ la perturbation périodique (qui dans le cas le plus général varie selon $f(z)$, dans le cas d'un méandre dans l'exemple donné ici). Dans ce cas, le coefficient de couplage s'exprime par la formule suivante :

$$k_y(z) = \frac{1}{4}\,\omega\varepsilon_0 \int \eta(x,y)^2\, f(z)e_i^*\, e_j\; dxdy$$

qui représente une intégrale de recouvrement de deux modes $e_1$ et $e_2$ dans la zone du réseau. L'établissement de ces deux dernières équations est présenté dans le document référencé [11]. On peut effectuer une décomposition de $n^2$ en série de Fourier sur une période de réseau $\Lambda$.

$$n^2 = \eta^2(x,y)\sum_{m=-\infty}^{m=+\infty} F^{(m)}\,\exp(i\frac{2m\pi}{\Lambda}z)$$

où

$$F^{(m)} = \frac{1}{\Lambda}\int_{-\Lambda/2}^{\Lambda/2} f(z)\exp(-i\frac{2m\pi}{\Lambda}z)dz$$

Pour un réseau à méandre tel que celui de la figure 23, les coefficients de Fourier sont donnés par :

$$F^{(m)} = \frac{h}{m\pi}\sin(\frac{m\pi\Lambda 1_+}{\Lambda})$$

Le développement en série Fourier du coefficient de couplage s'exprime :

$$k(z) = \sum_{m=-\infty}^{m=+\infty} \chi^{(m)}\,\exp(-i\frac{2m\pi}{\Lambda}z)$$

et

$$\chi^{(m)} = \frac{1}{4}\,\omega\varepsilon_0 F^{(m)}\int \eta^2(x,y)e_1 e_2^* dxdy$$

Les indices effectifs des deux guides étant différents, la lumière se propage avec une vitesse différente dans les deux guides. On peut exprimer la variation du champ électrique E dans le guide suivant un axe principal z :

$$E_{ij} = e_{ij} \exp(-i\beta_{ij}z - i_{\omega}t)$$

Où $\beta = 2\pi n/\lambda$. On voit que le produit $E_1 E^*_2$ est oscillatoire avec une périodicité

$$\Delta = \beta_1 - \beta_2$$

Le maximum de couplage aura lieu si la fonction f(z) a la même périodicité, donc si

$$\Lambda\Delta = 2\pi$$

Dans ce cas, on peut ne retenir dans le développement de Fourier de k(z) que le premier terme $\chi^{(1)}$, dominant pour le couplage, les autres termes étant oscillatoires.

On peut expliquer cela d'une manière plus intuitive. Remplaçons dans l'équation $k_{ij}(z) = \frac{1}{4}\omega\varepsilon_0 \int \eta(x,y)^2 f(z) e_i^* e_j dxdy$ les champs $e_1$ et $e_2$ par $E_1$ et $E_2$. On voit que le couplage, qui est proportionnel à la valeur de l'intégrale, est efficace seulement si les conditions $E_{tj} = e_{ij} \exp(-i\beta_{ij}z - i_{\omega}t)$ et $\Lambda\Delta = 2\pi$ sont satisfaites.

Pour une différence des indices constante, on peut faire varier k(z) soit :

- en faisant varier $\eta^2$ directement le long du réseau (par une variation de l'amplitude de réseau h, ou de la valeur de l'indice $\eta$ pour les réseaux sur fibre d'une section à l'autre).
- en faisant varier le recouvrement de deux modes $e_1 e^*_2$ le long du réseau (par une variation de la distance inter-guides d'une section à l'autre).

Une autre méthode pour faire varier le couplage est de garder une amplitude de coefficient de couplage constante mais de faire varier le rapport $\rho = \Lambda + /\Lambda$ comme présenté dans la référence [8] et par conséquent la valeur du premier coefficient dans le développement de Fourier. Pour un réseau de méandre, $\chi^{(1)}$ est maximal quant $\rho = 0.5$ et diminue quand ce rapport change.

Une autre méthode pour faire varier le couplage consiste à garder une amplitude de coefficient de couplage constante, mais d'introduire des parties sans réseau $\Lambda_0$ comme présenté dans les documents référencés [11] et [12]. Dans ce cas on peut introduire une période de super-réseau: $\Lambda_s = \Lambda + \Lambda_0$ et effectuer la décomposition en série de Fourier.

$$\chi^{(m)} = \int_r k(z) \exp\left(-i\frac{2m\pi}{\Lambda_s}z\right)dz$$

La valeur de $\chi^{(1)}$ est maximale quand $\Lambda_r = \Lambda_s$ et diminue avec l'introduction de la partie sans réseau $\Lambda_0$. On effectue l'apodisation en faisant varier ce rapport et par conséquent $\chi^{(1)}$ le long des guides (si la période de super-réseau comporte n périodes de réseau $\Lambda_f$, c'est le coefficient $\chi^{(n)}$ qu'il faut prendre alors comme valeur moyenne pour le coefficient de couplage).

Tous les raisonnements exposés ci-dessus s'appliquent également à un coupleur contradirectif. Dans ce cas, la différence est la suivante :

$$E_1 = e_{1+} \exp(-i\beta_1 z - i_{\omega}t) \qquad E_2 = e_{2-} \exp(i\beta_2 z - i\omega t) \qquad \Delta = (\beta_1 + \beta_2)/2$$

Les signes - et + désignent des ondes dans les deux guides qui se propagent vers la gauche et la droite sur l'axe z principal du guide.

Pour un réflecteur de Bragg, la différence est qu'on a un seul guide. Par conséquent, il n'existe pas de méthode d'apodisation par variation de la distance interguide. Dans ce cas

$$E_1 = e_+ \exp(-i\beta_1 z - i_{\omega}t) \qquad E_2 = e_- \exp(i\beta_2 z - i_{\omega}t) \qquad \Delta = \beta = \beta_1 = \beta_2$$

Tous les raisonnements exposés sont également valables.

Ainsi, dans les modes de réalisation préférentiels de l'invention proposés ici, le premier coefficient de Fourier défini pour chaque section de réseau reste constant. (Le recouvrement des champs $e_1 e_j^*$, la perturbation $\eta^2$ ne changent pas d'une section à l'autre), le rapport $\Lambda^+/\Lambda$ est égal à 0.5 pour chaque section et $\chi^{(1)}$ reste le même.

Il est possible de réaliser des réseaux où le coefficient de couplage $k^+$ sur la partie positive a une valeur absolue différente par rapport au coefficient de couplage $k^-$ sur la partie négative. Pour que le couplage soit efficace, il est nécessaire que :

$$K^+ \Lambda^+ = k^- \Lambda^-$$

où $\Lambda^+$ et $\Lambda^-$ sont les longueurs des segments avec respectivement un coefficient de couplage positif et négatif. En pratique il est préférable de réaliser $k^+ \sim k^-$ et par conséquent $\Lambda^+ \sim \Lambda^-$

Le fait que le premier coefficient de Fourier défini pour chaque section de réseau reste constant est obtenu parce que le réseau n'est plus périodique. Chaque pas de réseau a sa propre fréquence de résonance, contrairement au cas des autres méthodes présentées ci-avant où on peut dégager une période commune, la fréquence de résonance étant la même pour toutes les sections.

Toutefois, on prévoit une variante de l'invention dans laquelle on combine le procédé de réalisation d'un filtre à réseau avec une répartition des longueurs des sections conforme à celles proposées précédemment dans le cadre de l'invention, et dans laquelle on combine une telle répartition avec une méthode conventionnelle d'apodisation telle qu'une méthode où l'on fait varier le coefficient de couplage moyen par section le long du réseau.

Les inventeurs ont pu constater que dans certains cas une telle combinaison d'une répartition des longueurs des sections conforme à l'invention et d'une méthode d'apodisation conventionnelle permet d'améliorer les résultats obtenus.

[1] B. E. Little, C. Wu, W.P. Huang, «Synthesis of ideal window filter response in grating-assisted couplers», Optics Lett., vol.21, pp. 725-727, 1996.

[2] B E. Little, C. Wu, W.-P. Huang, «Syntesis of codirectional couplers with ultralow sidelobes and minimum bandwidth », Optics Lett., vol.20, pp. 1259-1261, 1995.

[3] G. H. Song, «Toward the idéal codirectional Bragg filter with an acousto-optic-filter design», J. Lighwave Technol., vol.13, pp. 470-780, 1995.

[4] J. Albert, K.O. Hill, D.C. Jonson, F. Bilodeau, M.J. Rooks, «Moire phase masks for automatic pure apodisation of fibre Bragg gratings », Electronic Lett., vol.32, pp. 2260-2261, 1996.

[5] P. Kashyap, A. Swanton, D.J. Armes, « Simple technique for apodising chirped and unchirped fibre gratings », Electronic Lett., vol.32, pp.1226-1227, 1996.

[6] J. Albert, K.O. Hil, B. Malo, S. Thériault, F. Bilodeau, D.C. Jonson, L.E. Erickson, «Apodisation of the spectral response of fibre Bragg gratings using a phase mask with variable difraction efficiency », Electroni Lett., vol.31, pp. 222-223, 1995.

[7] B. Malo, S. Thériault, D.C. Jonson, F. Bilodeau, J. Albert, K.O. Hili, «Apodised in fibre Bragg grating reflectors photoimprinted using a phase mask», Electronic Lett., vol. 31, pp 223-225, 1995.

[8] H. Sakata, « Sidelobe suppression in grating-assisted wavelengh-selective couplers », Optics Lett., vol. 17, pp. 463-465, 1992.

[9] S. François, M. Filoche, F. Huet, S. Fouchet, G. Hervé-Gruyer, A. Ougazzaden, J. Brandon, N. Bouadma, M. Carré, A. Carenco, «High sidelobe suppression ration in a directional coupler optical filter», proc. ECIO 95, pp. 315-317, 1995.

[10] Y. Shibata, S. Oku, Y. Kondo, T. Tamamura, M. Naganuma, «Semiconductor monolitic wavelenght selective router using a grating switch integrated with a directional coupler», J. Lightwave Technol., vol. 14, pp.1027-1032, 1996.

[11] Q. Guo, W.P. Huang, «Polarisation-independent optical filters based on co-directional phase-shifted grating assisted couplers : theory and design », IEEE Proc.-Optoelectron., vol. 143, pp. 173-177, 1996.

[12] Y. Shibata, T. Tamamura, S. Oku, Y. Kondo, « Coupling coefficient modulation of waveguide grating using sampled grating », IEEE Photonics Technol. Lett. vol. 6, pp. 1222-1224, 1994.

[13] R. Kashyap, «Design of step chirped fibre gratings », Optics Commun., vol. 136, pp. 461-469, 1997.

[14] D. Östling, H.E. Engan, «Broadband spatial mode conversion by chirped fibre bending», Optics Lett., vol. 1, pp. 192-194, 1996.

[15] J. Marti, D. Pastor, M. Tortola, J. Capmany, A. Montera, «On the use of tapered linearly chirped gratings as dispersion-induced Equalizers in SCM systems », J, Lightwave Technol., vol.15, pp. 179-187, 1997.

**Revendications**

1. Dispositif apte à être parcouru par une onde optique et à réaliser un filtrage en longueur d'onde de cette onde, dans lequel un paramètre optique du dispositif varie le long du parcours de l'onde de façon à ce que le dispositif présente une série de sections ($S_{-10}$-$S_{10}$, 500, 600) formées chacune de deux segments successifs, l'un où les valeurs du paramètre optique sont inférieures à une valeur moyenne (M), l'autre où les valeurs du paramètre optique sont supérieures à la valeur moyenne (M), **caractérisé en ce que** le dispositif présente au moins une zone ($S_{-10}$-$S_{10}$, 500, 600) où les sections successives ($S_{-10}$-$S_{10}$, 500, 600) ont des longueurs alternativement inférieures et supérieures à une longueur moyenne des sections sur cette zone ($S_{-10}$-$S_{10}$, 500, 600), de façon à présenter une réponse spectrale apodisée.

2. Dispositif selon la revendication 1, **caractérisé en ce que** dans ladite zone ($S_{-10}$-$S_{10}$, 500, 600), les segments ayant des valeurs du paramètre optique supérieures à la valeur moyenne (M) du paramètre optique présentent des longueurs alternativement inférieures et supérieures à une longueur moyenne de tels segments sur cette zone, et **en ce que** les segments ayant des valeurs du paramètre optique inférieures à la valeur moyenne (M) du paramètre optique présentent des longueurs alternativement inférieures et supérieures à une longueur moyenne de tels segments sur cette zone ($S_{-10}$-$S_{10}$, 500, 600).

3. Dispositif selon la revendication 2, **caractérisé en ce que**, dans ladite zone ($S_{-10}$-$S_{10}$, 500, 600), les deux segments formant chaque section ont la même longueur.

4. Dispositif selon l'une des revendications précédentes, **caractérisé en ce que** dans la dite zone ($S_{-10}$-$S_{10}$, 500, 600), les longueurs des sections oscillent alternativement autour d'une longueur moyenne avec une amplitude d'oscillation croissante lorsque l'on s'éloigne d'une partie centrale du dispositif.

5. Dispositif selon l'une des revendications 1 à 4, **caractérisé en ce que** dans ladite zone ($S_{-10}$-$S_{10}$, 500, 600), les longueurs des segments ayant des valeurs du paramètre optique supérieures à la valeur moyenne (M) du paramètre optique oscillent alternativement autour d'une longueur moyenne de ces segments avec une amplitude d'oscillation qui est croissante lorsque l'on s'éloigne d'une partie centrale du dispositif.

6. Dispositif selon l'une des revendications 1 à 5, **caractérisé en ce que** les longueurs des segments ayants des valeurs du paramètre optique inférieures à la valeur moyenne (M) du paramètre optique oscillent alternativement autour d'une longueur moyenne de ces segments avec une amplitude d'oscillation qui est croissante lorsque l'on s'éloigne d'une partie centrale du dispositif.

7. Dispositif selon la revendication 4, **caractérisé en ce que** l'amplitude d'oscillation des longueurs des sections est maximale aux extrémités du filtre.

8. Dispositif selon l'une des revendications 4 à 7, **caractérisé en ce que** l'amplitude d'oscillation des longueurs des sections est nulle au centre du dispositif.

9. Dispositif selon l'une des revendications 4 à 8, **caractérisé en ce que** l'amplitude d'oscillation des longueurs des sections croît de manière monotone entre le centre et au moins une extrémité du filtre.

10. Dispositif selon l'une des revendications 4 à 9, **caractérisé en ce que** l'amplitude d'oscillation des longueurs des sections augmente de façon linéaire en éloignement du centre, sur ladite zone.

11. Dispositif selon la revendication précédente, **caractérisé en ce que** l'amplitude d'oscillation des longueurs des sections ($S_{-10}$-$S_{10}$, 500, 600) varie linéairement entre le centre du dispositif, où elle est nulle, et chacune des extrémités du dispositif, où elle atteint son maximum.

12. Dispositif selon l'une des revendications précédentes, **caractérisé en ce que** la zone comportant un nombre N de sections ($S_{-10}$-$S_{10}$, 500, 600) et les sections étant numérotées s en parcourant la zone d'une extrémité à l'autre, les sections présentent des longueurs l(s) qui varient selon une loi de la forme $l(s) = l_0 \times (1 + \varepsilon(s) \times (-1)^s)$ où $l_0$ est la longueur moyenne et où $\varepsilon(s)$ varie selon une loi de la forme $\varepsilon(s) = c \times (\sin(\pi.(s-0,5-N/2) / N))$, c étant compris entre -1 et 1.

13. Dispositif selon la revendication précédente, **caractérisé en ce que** c est sensiblement égal à 0,7.

14. Dispositif selon l'une des revendications 1 à 12, **caractérisé en ce que** les sections ($S_{-10}$-$S_{10}$, 500, 600) de ladite zone présentent un écart maximal à la longueur moyenne des sections sur la zone qui est inférieur à une fois cette longueur moyenne.

15. Dispositif selon la revendication précédente, **caractérisé en ce que** les sections ($S_{-10}$-$S_{10}$, 500, 600) de ladite zone présentent un écart maximal à la longueur moyenne des sections sur la zone qui est compris entre 0,8 fois et 1,0 fois la longueur moyenne des sections de la zone.

16. Dispositif selon l'une des revendications précédentes, **caractérisé en ce que** le dispositif répond au formalisme des modes couplés.

17. Dispositif selon l'une des revendications 1 à 16, **caractérisé en ce qu'**il constitue un coupleur co-directif.

18. Dispositif selon l'une des revendications 1 à 16, **caractérisé en ce qu'**il constitue un coupleur contra-directif.

19. Dispositif selon l'une des revendications 1 à 16, **caractérisé en ce qu'**il constitue un convertisseur de mode à fibre.

20. Dispositif selon l'une des revendication 1 à 15, **caractérisé en ce qu'**il constitue un miroir de Bragg.

21. Dispositif selon l'une des revendications 1 à 15, **caractérisé en ce qu'**il constitue un réflecteur de Bragg.

22. Dispositif selon la revendication 16, **caractérisé en ce que** les sections ($S_{-10}$-$S_{10}$, 500, 600) de la zone présentent des valeurs moyennes par section du coefficient de couplage qui sont les mêmes pour toutes les sections de la zone.

## Patentansprüche

1. Vorrichtung, die von einer optischen Welle durchlaufen werden kann und eine Filterung in der Wellenlänge dieser Welle bewirken kann, bei der ein optischer Parameter der Vorrichtung längs des Weges der Welle derart variiert, daß die Vorrichtung eine Reihe von Abschnitten ($S_{-10}$-$S_{10}$, 500, 600) aufweist, die jeweils aus zwei aufeinanderfolgenden Segmenten gebildet sind und zwar einem, bei dem die Werte des optischen Parameters unter einem Mittelwert (M) liegen, und einem anderen, bei dem die Werte des optischen Parameters über dem Mittelwert (M) liegen, **dadurch gekennzeichnet, daß** die Vorrichtung wenigstens einen Bereich ($S_{-10}$-$S_{10}$, 500, 600) aufweist, in dem die aufeinanderfolgenden Abschnitte ($S_{-10}$-$S_{10}$, 500, 600) Längen haben, die abwechselnd größer und kleiner als eine mittlere Länge der Abschnitte in diesem Bereich ($S_{-10}$-$S_{10}$, 500, 600) sind, derart, daß sich ein apodisiertes spektrales Verhalten ergibt.

2. Vorrichtung nach Anspruch 1, **dadurch gekennzeichnet, daß** in dem besagten Bereich ($S_{-10}$-$S_{10}$, 500, 600) die Segmente mit Werten des optischen Parameters, die über dem Mittelwert (M) des optischen Parameters liegen, Längen haben, die abwechselnd kleiner und größer als eine mittlere Länge dieser Segmente in diesem Bereich sind und daß die Segmente mit Werten des optischen Parameters, die unter dem Mittelwert (M) des optischen Parameters liegen, Längen haben, die abwechselnd kleiner und größer als eine mittlere Länge dieser Segmente in diesem Bereich ($S_{-10}$-$S_{10}$, 500, 600) sind.

3. Vorrichtung nach Anspruch 2, **dadurch gekennzeichnet, daß** in dem besagten Bereich ($S_{-10}$-$S_{10}$, 500, 600) die beiden Segmente, die jeden Abschnitt bilden, dieselbe Länge haben.

4. Vorrichtung nach einem der vorhergehenden Ansprüche, **dadurch gekennzeichnet, daß** in dem besagten Bereich ($S_{-10}$-$S_{10}$, 500, 600) die Längen der Abschnitte abwechselnd um eine mittlere Länge mit einer Schwingungsamplitude schwingen, die zunimmt, wenn man sich von einem mittleren Teil der Vorrichtung entfernt.

5. Vorrichtung nach einem der Ansprüche 1 bis 4, **dadurch gekennzeichnet, daß** in dem besagten Bereich ($S_{-10}$-$S_{10}$, 500, 600) die Längen der Segmente mit Werten des optischen Parameters, die über dem Mittelwert (M) des optischen Parameters liegen, abwechselnd um eine mittlere Länge dieser Segmente mit einer Schwingungsamplitude schwingen, die zunimmt, wenn man sich von einem mittleren Teil der Vorrichtung entfernt.

6. Vorrichtung nach einem Ansprüche 1 bis 5, **dadurch gekennzeichnet, daß** die Länge der Segmente mit Werten des optischen Parameters, die kleiner als der Mittelwert (M) des optischen Parameters sind, abwechselnd um eine mittlere Länge dieser Segmente mit einer Schwingungsamplitude schwingen, die zunimmt, wenn man sich von einem mittleren Teil der Vorrichtung entfernt.

7. Vorrichtung nach Anspruch 4, **dadurch gekennzeichnet, daß** die Schwingungsamplitude der Länge der Abschnitte an den Enden des Filters am größten ist.

8. Vorrichtung nach einem der Ansprüche 4 bis 7, **dadurch gekennzeichnet, daß** die Schwingungsamplitude der Länge der Abschnitte in der Mitte der Vorrichtung gleich Null ist.

9. Vorrichtung nach einem der Ansprüche 4 bis 8, **dadurch gekennzeichnet, daß** die Schwingungsamplitude der Länge der Abschnitte zwischen der Mitte und wenigstens einem Ende des Filters gleichförmig ansteigt.

10. Vorrichtung nach einem der Ansprüche 4 bis 9, **dadurch gekennzeichnet, daß** die Schwingungsamplitude der Länge der Abschnitte mit steigendem Abstand von der Mitte in dem besagten Bereich linear zunimmt.

11. Vorrichtung nach einem der vorhergehenden Ansprüche, **dadurch gekennzeichnet, daß** die Schwingungsamplitude der Länge der Abschnitte ($S_{-10}$-$S_{10}$, 500, 600) zwischen der Mitte der Vorrichtung, wo sie gleich Null ist, und jedem Ende der Vorrichtung, wo sie ein Maximum hat, linear variiert.

12. Vorrichtung nach einem der vorhergehenden Ansprüche, **dadurch gekennzeichnet, daß** dann, wenn der Bereich N Abschnitte ($S_{-10}$-$S_{10}$, 500, 600) umfaßt, und die Abstände mit s durchgehend über den Bereich von einem Ende zum anderen numeriert sind, die Abschnitte Längen l(s) haben, die nach der folgenden Gleichung $l(s) = l_0 \times (1+\varepsilon(s) \times (-1)^s)$ variieren, wobei $l_0$ die mittlere Länge ist und $\varepsilon(s)$ nach der Gleichung $\varepsilon(s) = c \times (\sin(\pi(s-0{,}5-N/2)N))$ variiert, wobei c zwischen -1 und 1 liegt.

13. Vorrichtung nach dem vorhergehenden Anspruch, **dadurch gekennzeichnet, daß** c im Wesentlichen gleich 0,7 ist.

14. Vorrichtung nach einem der Ansprüche 1 bis 12, **dadurch gekennzeichnet, daß** die Abschnitte ($S_{-10}$-$S_{10}$, 500, 600) des besagten Bereiches eine maximale Abweichung von der mittleren Länge der Abschnitte in dem Bereich zeigen, die unter einer mittleren Länge liegt.

15. Vorrichtung nach einem der vorhergehenden Ansprüche, **dadurch gekennzeichnet, daß** die Abschnitte ($S_{-10}$-$S_{10}$, 500, 600) des besagten Bereiches, eine maximale Abweichung von der mittleren Länge der Abschnitte in diesem Bereich zeigen, die zwischen dem 0,8fachen und dem 1,0fachen der mittleren Länge der Abschnitte des Bereiches liegt.

16. Vorrichtung nach einem der vorhergehenden Ansprüche, **dadurch gekennzeichnet, daß** die Vorrichtung auf den Formalismus der anliegenden Moden anspricht.

17. Vorrichtung nach einem der Ansprüche 1 bis 16, **dadurch gekennzeichnet, daß** sie einen gleichsinnigen Koppler bildet.

18. Vorrichtung nach einem der Ansprüche 1 bis 16, **dadurch gekennzeichnet, daß** sie einen gegensinnigen Koppler bildet.

19. Vorrichtung nach einem der Ansprüche 1 bis 16, **dadurch gekennzeichnet, daß** sie einen Fasermodenwandler bildet.

20. Vorrichtung nach einem der Ansprüche 1 bis 15, **dadurch gekennzeichnet, daß** sie einen Bragg'schen Spiegel bildet.

21. Vorrichtung nach einem der Ansprüche 1 bis 15, **dadurch gekennzeichnet, daß** sie einen Bragg'schen Reflektor bildet.

22. Vorrichtung nach Anspruch 16, **dadurch gekennzeichnet, daß** die Abschnitte ($S_{-10}$-$S_{10}$, 500, 600) des Bereiches Mittelwerte pro Abschnitt des Kopplungskoeffizienten zeigen, die für alle Abschnitte des Bereiches gleich sind.

**Claims**

1.  A device suitable for conveying a light wave and performing wavelength filtering on said wave, in which an optical parameter of the device varies along the path of the wave in such a manner that the device presents a series of sections ($S_{-10}$ to $S_{10}$, 500, 600), where each section comprises two successive segments, one segment in which the values of the optical parameter are lower than a mean value (M), and the other segment in which the values of the optical parameter are greater than the mean value (M), the device being **characterized in that** it presents at least one zone ($S_{-10}$ to $S_{10}$, 500, 600) in which the successive sections ($S_{-10}$ to $S_{10}$, 500, 600) are of lengths that are alternately shorter than and longer than a mean length for sections in said zone ($S_{-10}$ to $S_{10}$, 500, 600), so as to present a spectral response that is apodized.

2.  A device according to claim 1, **characterized in that** in said zone ($S_{-10}$ to $S_{10}$, 500, 600) the segments having optical parameter values greater than the mean value (M) for the optical parameter present lengths that are alternately shorter than and longer than a mean length for such segments in said zone, and **in that** the segments having optical parameter values less than the mean value (M) for the optical parameter present lengths that are alternately shorter than and greater than a mean length for said segments over said zone ($S_{-10}$ to $S_{10}$, 500, 600).

3.  A device according to claim 2, **characterized in that** in said zone ($S_{-10}$ to $S_{10}$, 500, 600) the two segments forming each section are of the same length.

4.  A device according to any preceding claim, **characterized in that** in said zone ($S_{-10}$ to $S_{10}$, 500, 600), the lengths of the sections oscillate in alternation about a mean length with the amplitude of the oscillation increasing on going away from a central portion of the device.

5.  A device according to any one of claims 1 to 4, **characterized in that** in said zone ($S_{-10}$ to $S_{10}$, 500, 600) the lengths of the segments having optical parameter values greater than the mean value (M) for the optical parameter oscillate in alternation about a mean length for said segments with the amplitude of the oscillation increasing on going away from a central portion of the device.

6.  A device according to any one of claims 1 to 5, **characterized in that** the lengths of the segments having optical parameter values less than the mean value (M) for the optical parameter oscillate in alternation about a mean length for said segments with the amplitude of the oscillation increasing on going away from a central portion of the device.

7.  A device according to claim 4, **characterized in that** the amplitude of the oscillation of the lengths of the sections is at a maximum at the ends of the filter.

8.  A device according to any one of claims 4 to 7, **characterized in that** the amplitude of the oscillation of the section lengths is zero at the center of the device.

9.  A device according to any one of claims 4 to 8, **characterized in that** the amplitude oscillation of the section lengths increases monotonically between the center and at least one end of the filter.

10. A device according to any one of claims 4 to 9, **characterized in that** the amplitude of the oscillation of the section lengths increases linearly going away from the center over said zone.

11. A device according to the preceding claim, **characterized in that** the amplitude of the oscillation of the section lengths ($S_{-10}$ to $S_{10}$, 500, 600) varies linearly between the center of the device where it is zero and each of the ends of the device where it reaches its maximum.

12. A device according to any preceding claim, **characterized in that** the zone having N sections ($S_{-10}$ to $S_{10}$, 500, 600) with the sections being numbered $\underline{s}$ going along the zone from one end to the other, the sections present lengths $\ell(s)$ which vary in application of a relationship of the form:

$$\ell(s) = \ell_0 \times (1 + \varepsilon(s) \times (-1)^s)$$

where $\ell_0$ is the mean length and where $\varepsilon(s)$ varies in application of a relationship having the form:

$$\varepsilon(s) = c.\sin(\pi.(s - 0.5 - \frac{N}{2})/N)$$

where $c$ lies in the range -1 to 1.

13. A device according to the preceding claim, **characterized in that** $c$ is substantially equal to 0.7.

14. A device according to any one of claims 1 to 12, **characterized in that** the sections ($S_{-10}$ to $S_{10}$, 500, 600) of said zone present a maximum difference from the mean length of the sections over the zone which is smaller than said mean length.

15. A device according to the preceding claim, **characterized in that** the sections ($S_{-10}$ to $S_{10}$, 500, 600) of said zone present a maximum difference from the mean length of the sections over the zone which lies in the range 0.8 times to 1.0 times the mean length of the sections of the zone.

16. A device according to any preceding claim, **characterized in that** the device satisfies coupled-mode formalism.

17. A device according to any one of claims 1 to 16, **characterized in that** it constitutes a co-directional coupler.

18. A device according to any one of claims 1 to 16, **characterized in that** it constitutes a contra-directional coupler.

19. A device according to any one of claims 1 to 16, **characterized in that** it constitutes a fiber mode-converter.

20. A device according to any one of claims 1 to 15, **characterized in that** it constitutes a Bragg mirror.

21. A device according to any one of claims 1 to 15, **characterized in that** it constitutes a Bragg reflector.

22. A device according to claim 16, **characterized in that** the sections ($S_{-10}$ to $S_{10}$, 500, 600) of the zone present mean values per section for the coupling coefficient which are the same for all of the sections of the zone.

*FIG.1*

II

II

*FIG.2*

2 μm

1,5 μm

0,02 μm

0,2 μm

InGaAsP

InP

*FIG.3*

# *FIG.4*

# *FIG.5*

# *FIG.6*

$$\delta 1 \quad \delta 1 \quad \delta 1 \quad \delta 1 \qquad \qquad \delta 1$$

$$\Lambda_1 \quad \Lambda_2 \quad \Lambda_3 \quad \Lambda_4 \qquad \qquad \Lambda_n$$

## FIG.7

## FIG.8

## FIG.9

## FIG.10

## FIG.11

## FIG.12

## FIG.13

## FIG.14

## FIG.15

## FIG.16

24

# FIG.17

# FIG.18

## FIG.19

## FIG.20

# FIG.21

# FIG.22

# FIG.23